# EUROPÄISCHE PATENTSCHRIFT

(11) **EP 4 327 520 B1**
(45) Veröffentlichungstag und Bekanntmachung des Hinweises auf die Patenterteilung: **20.11.2024**
(21) Anmeldenummer: 21735625.2
(22) Anmeldetag: 18.06.2021
(51) Int. Cl.: H04L 12/46

(54) **VERFAHREN UND VORRICHTUNG ZUR KOPPLUNG DER FUNKTIONALEN STEUERUNG IN EINEM VERTEILTEN AUTOMATISIERUNGSSYSTEM**
METHOD AND APPARATUS FOR COUPLING THE FUNCTIONAL CONTROL IN A DISTRIBUTED AUTOMATION SYSTEM
PROCÉDÉ ET APPAREIL DE COUPLAGE DE COMMANDE FONCTIONNELLE DANS UN SYSTÈME D'AUTOMATISATION DISTRIBUÉ

(43) Veröffentlichungstag der Anmeldung: 28.02.2024
(73) Patentinhaber: Siemens Aktiengesellschaft, 80333 München (DE)
(72) Erfinder: BLUMENSTEIN, Michelle, 07950 Zeulenroda-Triebes/Triebes (DE); MAURMAIER, Mathias, 70839 Gerlingen (DE); STUTZ, Andreas, 76344 Eggenstein-Leopoldshafen (DE)
(74) Vertreter: Siemens Patent Attorneys
(86) Internationale Anmeldenummer: PCT/EP2021/066593
(87) Internationale Veröffentlichungsnummer: WO 2022/262993

(56) Entgegenhaltungen:
- DE-A1- 102008 058 033
- US-A1- 2014 351 443
- US-A1- 2016 003 892

## Beschreibung

Trends zur immer stärkeren Individualisierung von Produkten, kürzeren Produktlebenszyklen und einer hohen Volatilität der Märkte sind zu verzeichnen, zunächst in der Fertigungsautomatisierung, inzwischen auch in der Prozessindustrie. Diese marktseitigen Entwicklungen erfordern eine immer stärkere Wandelbarkeit von Produktionsanlagen. Diese Wandelbarkeit unterliegt fünf Befähigungsmerkmalen - Universalität, Mobilität, Skalierbarkeit, Modularität und Kompatibilität:
- Universalität beschreibt dabei die Dimensionierung und Gestaltung einer Anlage für verschiedene Anforderungen hinsichtlich des Produkts und der Technologie (z.B. Variantenvielfalt) .
- Mobilität sieht die örtlich uneingeschränkte Bewegbarkeit von Objekten vor (z.B. Maschinen auf Rollen).
- Bei der Skalierbarkeit wird eine technische, räumliche und personelle Atmungsfähigkeit (= Erweiter- und Reduzierbarkeit) gewünscht (z. B. wirtschaftliche Größenanpassung der Anlage gemäß der vorherrschenden Marktanforderungen).
- Im Zuge der Modularität sollen standardisierte, funktionsfähige Einheiten oder Elemente geschaffen werden (z. B. "Plug & Produce" Module).
- Die Kompatibilität stellt schließlich die Vernetzungsfähigkeit bzgl. Material, Information, Medien und Energie sicher (z. B. einheitliche Softwareschnittstellen).

Diese Merkmale gilt es nicht nur im hardwareseitigen Aufbau einer Produktionsanlage zu berücksichtigen, sondern vor allem auch bei der Gestaltung der Automatisierungstechnik. Dies stellt heutige Automatisierungssysteme vor Herausforderungen.

In heutige Automatisierungssystemen besteht eine enge Kopplung zwischen der funktionalen Implementierung und deren Anbindung an den physikalischen Prozess. Diese Kopplung ist vor allem dadurch gekennzeichnet, dass die Integrationsmöglichkeiten dezentraler Peripherie beschränkt sind auf die Einbindung einzelner hardwarespezifischer Signale. Unterschiedliche Sensoren und Aktoren werden dabei über unterschiedliche Schnittstellen angesteuert, auch wenn sie ähnliche oder gleiche Aufgaben erfüllen. Dieser Aspekt steht einer Reihe von Wandlungsbefähigern entgegen:
Mit Hinblick auf die Universalität ergibt sich das Problem, dass eine Variantenvielfalt in der Implementierung der Sensor- und Aktorlogik kaum realisierbar ist, da sich diese in unterschiedlichen Signalschnittstellen widerspiegelt.

Aus dem gleichen Grund wird auch der Einsatz intelligenterer Feldgeräte oder leistungsstärkerer Technologien beschränkt, was dem Wandlungsbefähiger der Skalierbarkeit entgegensteht.

Eine Kompatibilität ist in Bezug auf die Informationsflüsse zwischen dezentraler Peripherie und Automatisierungssystem nur dann gegeben, wenn die entsprechenden Signalschnittstellen übereinstimmen. Bei einer Varianz verschiedener Sensor- und/oder Aktortypen und einer damit einhergehenden Varianz der Signalschnittstellen ist keine Kompatibilität gewährleistet.

Die Anbindung dezentraler Peripherie an das Automatisierungssystem auf Basis von Einzelsignalen ist mit einer großen Anzahl von Einzelleitungen und dem Einsatz von zusätzlichen Remote-IO-Baugruppen verbunden. Dies schränkt das einfache Umstecken von Sensoren und Aktoren an eine andere Stelle der Anlage und damit deren Mobilität ein.

Für die Umsetzung der zuvor genannten Wandlungsbefähiger ist maßgeblich die Modularität der Anlage entscheidend. Diese ist heute häufig auf den physikalischen Aufbau der Anlage beschränkt und spiegelt sich nicht in der Automatisierungssoftware wider.

Zusammenfassend lässt sich schließen, dass die Anbindung von dezentraler Peripherie an das Automatisierungssystem bisher auf Basis von Einzelsignalen erfolgt, die direkt Sensoren und Aktoren ansteuern. Dies war bisher ausreichend, da Automatisierungssoftware darauf basierte, Eingangssignale durch einfache signalwandelnde Logik in Ausgangssignale umzusetzen. Sobald jedoch die Anforderung nach Wandelbarkeit an eine Anlage gestellt wird, birgt dieses Konzept die oben genannten Herausforderungen.

### Stand der Technik

Ein heute bereits existierender Ansatz, um die aufgezeigten Herausforderungen zu bewältigen, stellt der Einsatz intelligenter Feldgeräte, d. h. dezentraler Intelligenz, dar. Die Logik zur Ansteuerung einzelner kleiner Sensoren und Aktoren wird nicht im Automatisierungssystem realisiert, sondern direkt im Feld, also dort, wo sie benötigt wird. Bekannt sind solche Ansätze beispielsweise aus dem Edge-Umfeld. Dies bietet den Vorteil, dass das Automatisierungssystem keine Einzelsignale zur Steuerung der dezentralen Peripherie mehr verarbeiten muss. Stattdessen wird die Funktionalität eines Sensors, eines Aktors oder eines ganzen Regelkreises abstrahiert und dem Automatisierungssystem über eine definierte, bestenfalls standardisierte Schnittstelle zur Verfügung gestellt.

Eine Technologie, die diese Idee bereits heute in Ansätzen nutzt, ist PROFIBUS PA. Hierbei wurden Funktionsbausteine standardisiert, die die Kommunikation im Feld umsetzen, ohne in das Automatisierungssystem integriert zu sein. Allerdings liegt bei PROFIBUS PA nach wie vor eine signalbasierte Abstraktion vor. Im Bereich der Fertigungsindustrie wurde die Grundlage für dezentrale Intelligenz durch die IO-Link-Technologie gelegt. Der Einsatz dieser Ansätze ist heute dadurch beschränkt, dass die heutigen Integrationstechnologien die integrierten Funktionen intelligenter Geräte nur teilweise oder gar nicht berücksichtigen.

Ein Beispiel für eine solche Anbindung findet sich in der DE 10 2008 058 033A1, wo hinter einer serielle Schnittstelle eine Ethernet Schnittstelle emuliert wird, so dass auf den Webserver über das bekannte TCP/IP Protokoll zugegriffen werden kann.

Neben diesen Feldbussystemen bieten einige Hersteller auch Kleinst-Steuerungen an, die sich sehr gut zur Realisierung dezentraler Intelligenz im Feld eignen, beispielsweise die TBEN-L-PLC der Fima Turck. Diese besitzt neben einer CODESYSbasierten Steuerungskomponente auch die Möglichkeit, über verschiedene Protokolle (z. B. PROFINET, Ethernet, Modbus) mit anderen Speicherprogrammierbaren Steuerungen (SPS) oder auch direkt mit einer Cloud zu kommunizieren.

Schließlich werden im Rahmen des Standards VDI/VDE/NAMUR 2658 teils vollständige Funktionen von Prozessanlagen als dezentrale Intelligenz in Module, Process Equipment Assemblies (PEAs) genannt, ausgelagert. Einen ähnlichen Ansatz verfolgt auch das Forschungsgebiet rund um Skills und Capabilities im Bereich der Fertigungsautomatisierung. Die Konzepte der Modularen Automation basierend auf der VDI/VDE/NAMUR 2658 werden als sehr guter Ansatz zur Realisierung dezentraler Intelligenz in künftigen Automatisierungssystemen und damit zur Lösung der aufgezeigten Problemstellung gesehen.

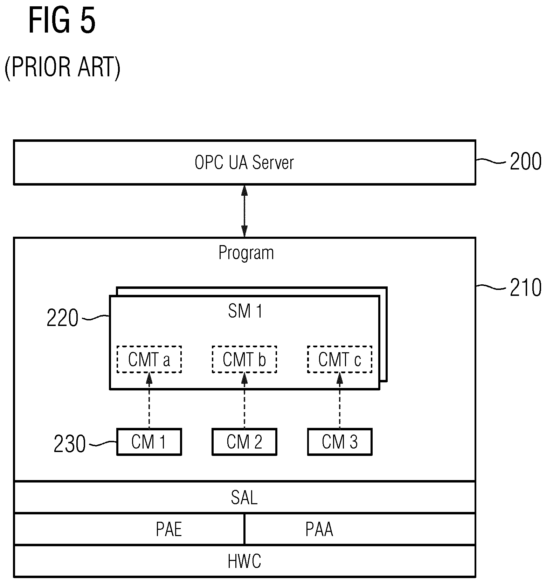

Das Architekturkonzept der VDI/VDE/NAMUR 2658 ist auch in der Figur 5 näher dargestellt.

Das Schichtmodell ist von unten nach oben wie folgt aufgebaut. Eine detailliertere Darstellung der einzelnen Module folgt weiter unten:
Hardware Konfiguration, HWC
Prozessabbild der Eingänge, PAE / Prozessabbild der Ausgänge PAA
Signal Abstraction Layer SAL
Service Modul SM1
Control Modul CM1, CM2, CM3
Control Modul Types CMT1, ...

Eine Kommunikation erfolgt in dem dargestellten Beispiel gemäß dem OPC UA Standard.

Die heutigen Konzepte der Modularen Automation basieren darauf, prozesstechnische Funktionen als dezentrale Intelligenz zur Verfügung zu stellen. Diese Funktionen werden dabei in Form von Services in modularen Prozesseinheiten PEAs realisiert.

Service Module SM und Control Module CM:
Ein sogenannter Service (Dienst) setzt sich dabei aus einem Servicemodule SM sowie einer beliebigen Anzahl an Control Modulen CM zusammen. Im Service Modul ist die Steuerungslogik des Service auf Basis eines standardisierten Zustandsautomaten realisiert. Dabei ist jedoch noch nicht festgelegt, welche Sensoren und Aktoren zur Ausführung des Service zum Einsatz kommen. Die Control Module hingegen kapseln die Logik zur Ansteuerung von Sensoren und/oder Aktoren und dienen damit der Anbindung des Service an den physikalischen Prozess.

Um einen vollständigen Service zu realisieren, muss man einem Service Modul die benötigten Control Module zuordnen. Diese Zuordnung ist im hier vorgestellten Architekturkonzept flexibel realisiert. Das Programm der Service Module ist hierzu gegen eine Typ-Schnittstelle für Sensoren und Aktoren entwickelt. Es beinhaltet entsprechende Platzhalter-Bausteine an Stellen, an denen eine Interaktion mit dem Produktionsprozess und damit die Integration eines Control Moduls erforderlich ist. Diese Platzhalter sind als Control Modul Typen CMT realisiert und besitzen das gleiche standardisierte Schnittstelle wie die Control Module, die die Platzhalter später ausfüllen sollen. Dabei stehen verschiedene Control Modul Typen CMT mit verschiedenen Schnittstellen für beispielsweise Ventile, Motoren, Sensoren oder auch ganze Regelkreise zur Verfügung. Zur Realisierung des Dienstes werden die Interfaces der gewünschten Control Module CM auf die Schnittstellen der Platzhalter CMTs gemapped. Auf diese Art und Weise werden dem SM die tatsächlich anzusteuernden Sensoren und Aktoren zugeordnet.

Dieses Vorgehen weist aber den Nachteil auf, dass die Zuordnung einmal im Zuge des Engineerings des Systems erfolgt und danach ohne Anpassung des Steuerungsprogramms nicht mehr angepasst werden kann.

Eine Konfigurations- und Laufzeitschnittstelle für Service Module SM wird durch einen ebenfalls in der Modularen Prozesseinheit PEA enthaltenen OPC UA Server bereitgestellt. Über diese können Konfigurations- und Prozedurparameter von Service Modulen SMs eingestellt werden und die Aussteuerung des Zustandsautomaten der Service Moduls SM (Starten, Stoppen, ...) erfolgen.

### Signal Abstraction Layer, SAL

Die Interaktion der Control Module CMs mit den Sensoren und Aktoren des Produktionsprozesses basiert auf klassischen Mechanismen. Im Zuge der Hardware-Konfiguration HWC werden Hardware-Adressen definiert, unter welchen die verwendeten Sensoren und Aktoren zu finden sind. Die aktuellen Werte hinter diesen Adressen werden zu Beginn eines jeden SPS Steuerungs-Zyklus in einem Prozessabbild der Eingänge PAE im Falle der Sensorsignale bzw. in einem Prozessabbild der Ausgänge PAA im Falle der Aktorsignale festgehalten. Die im PAE und PAA gespeicherten Werte können dann im Steuerungsprogramm der Control Module CM verwendet werden. Um die Verwendung dieser Signale zu vereinfachen, werden im Programm jedoch nicht die Hardwareadressen selbst verwendet, sondern benutzerdefinierte Symbole, die den Hardwareadressen zugeordnet sind. Die Relation zwischen den in der HWC definierten Hardwareadressen und den im Programm verwendeten Symbolen erfolgt über einen Mechanismus, der sich Signal Abstraction Layer SAL nennt.

Die modularen Prozesseinheiten PEA im Sinne der VDI/VDE/NAMUR 2658 stellen also eine dezentrale Intelligenz abstrahiert über standardisierte Schnittstellen bereit. Somit wird die aufgezeigte Problemstellung auf Ebene der PEAs gelöst. Eine modulare Anlage im Sinne der VDI/VDE/NAMUR 2658 ist in der Art wandelbar, dass ganze PEAs integriert, desintegriert und ausgetauscht werden können.

Im vorherigen Abschnitt wurde aufgezeigt, dass innerhalb einer modularen Prozesseinheit PEA die Interaktion mit dem Produktionsprozess nach wie vor auf einzelnen Steuersignalen hin zu Sensoren und Aktoren basiert.

In Bezug auf die Integration, Desintegration und den Austausch einzelner Sensoren und Aktoren ist die PEA somit nicht wandelbar. Dies liegt darin begründet, dass die zur Interaktion zwischen Control Modul CM und der Feldebene notwendigen Signale je nach Art und Variante der eingesetzten Sensoren und Aktoren variieren können. So existieren beispielsweise Ventile mit keinem, einem oder doppel-ausgeführtem Feedbacksignal. Motoren können mit oder ohne Drehzahlvorgabe, Drehzahlrückmeldung oder Drehrichtungsumschaltung ausgeführt sein. Diese Variantenvielfalt kann der Signal Abstraction Layer SAL nicht abfangen, da er auf Ebene der Einzelsignale abstrahiert. Dies beschränkt die Freiheitsgrade des Sensor- und Aktor-Austauschs und damit die Wandelbarkeit einer PEA stark.

Es ist daher Aufgabe der Erfindung, ein Verfahren und ein System anzugeben, welches die im Stand der Technik aufgezeigten Nachteile überwindet.

Die Erfindung ist definiert durch ein Verfahren mit den Merkmalen des unabhängigen Patentanspruchs 1.

Das System ist weiterhin durch die Merkmale des Patentanspruchs 6 beschrieben.

Weitere vorteilhafte Ausgestaltungen der Erfindung sind in den Unteransprüchen dargelegt.

Es wird eine komponenten-basierte und funktions-kapselnde Systemarchitektur vorgestellt, die die derzeitigen Herausforderungen bewältigt, indem zunehmend intelligentere Geräte im Feld als funktionale Komponenten assoziiert werden.

### Grundlegender Architekturansatz:

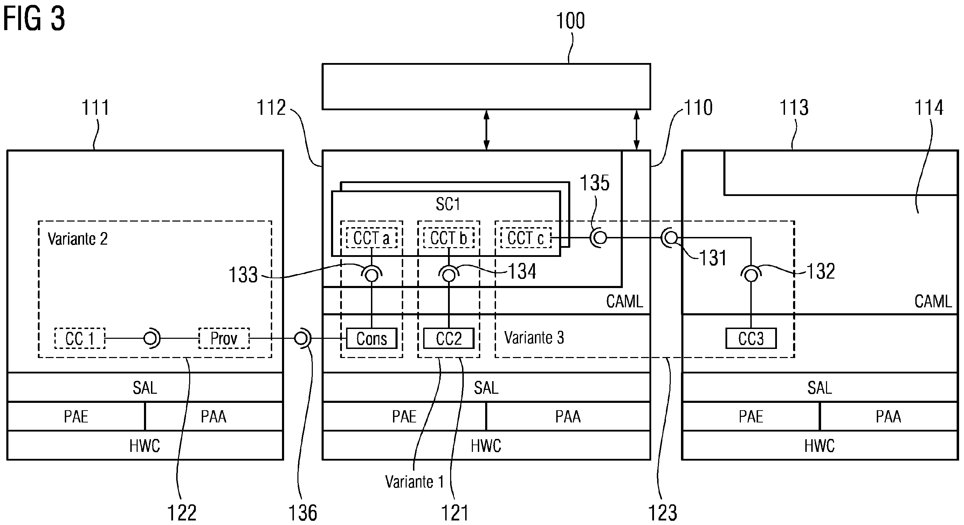

Im Gegensatz zum Signal Abstraction Layer SAL ist der Übergang zwischen Control Modulen CM und Service Modulen SM (im Folgenden auch als Component Abstraction and Management Layer CAML bezeichnet) in der Lage, die beschriebene Variantenvielfalt der Sensoren und Aktoren zu abstrahieren. Aufgrund dessen wird im Rahmen dieser Erfindungsmeldung ein System vorgestellt, welches den CAML als Abstraktionsebene für Sensor- und Aktor-Funktionalität vorsieht. Eine mögliche Automatisierungsarchitektur ist in Figur 3 dargestellt und wird im Folgenden genauer erläutert.

Der grundlegende Aufbau dieser Architektur ist stark angelehnt an die in der Beschreibungseinleitung erwähnte Architektur der VDI/VDE/NAMUR 2658. Zur Abgrenzung beider Ansätze wurden allerdings nicht mehr die Begriffe Service Module SM, Control Module CM und Control Module Template CMT gewählt, sondern es wird im Weiteren stattdessen von Service Components SC, Control Component CC und Control Component Type CCT gesprochen. Der Begriff der Komponente (Component) ist dabei angelehnt an die unterste Ebene im Strukturmodell modularer Anlagen gemäß VDI 2776 (Verfahrenstechnische Anlagen - Modulare Anlagen, Grundlagen und Planung modularer Anlagen). Ein Control Component Type CCT bietet eine Möglichkeit einer Implementierung beispielsweise der Komponente Control Component mit einem offenen standardisierten Interface, bei der eine Zuordnung von realen Daten einer konkreten Anwendung erst zu einem späteren Zeitpunkt (über die Schnittstelle) möglich ist.

### CONTROL COMPONENT

Automatisierungsgeräte (Sensoren, Aktoren, Package Units, IO-Stationen) werden zunehmend intelligenter und haben eigene Rechenkapazitäten, sodass deren Firmware durchaus mehr kann als nur Signale bereitstellen.

Eine CC ist die Softwarerepräsentanz eines Automatisierungsgeräts. Diese Repräsentanz kann auf dem Gerät selbst oder auch auf einer Steuerung etc. ausgeführt werden. Automatisierungsgerät und Repräsentanz sind adressierbar.

Diese Komponente ist eine adressierbare Einheit und besitzt eine standardisierte Schnittstelle (z. B. nach 2658), dies ist der wesentliche Unterschied zu den aus dem Stand der Technik bekannten Control Modules CM.

Gerätespezifische Besonderheiten werden lokal in der Komponente gelöst, so dass die Komponente nach Außen immer identisch aussieht. Das Gerät kann selbst eine eigene Rechner-Ressource sein (embedded device) oder über etablierte Feldbussysteme um eine externe Rechner-Ressource erweitert werden.

Zusammenfassend hat eine Control Component folgende technische Merkmale:
- Anbindung an den industriellen Prozess (Fertigungs- oder verfahrenstechnischer Prozess)
- Eigene Rechner-Kapazitäten für die Verarbeitung von Software (embedded device, PLC, Edge-Device)
- Standardisierte Kommunikationstechnologie (z.B. OPC UA Server/Client, OPC UA Pub/Sub)
- Standardisierte funktionsorientierte Komponentenschnittstelle (z. B. nach VDI/VDE/NAMUR 2658)
- Gerätespezifische Anpassung zur Erfüllung der standardisierten Komponentenschnittstelle ist lokal zu lösen in der eigenen Rechner-Kapazität (z. B. Ventil hat keine, eine oder zwei Rückmeldungen)
- Control Component als funktionale Einheit ist als eine Entität addressierbar (z. B. opc.tcp://192.168.2.1:4840/ns=1:s=TI001)

Die Control Component Address ist abhängig von der zu Grunde liegende Kommunikationstechnologie

### SERVICE COMPONENT

Services (Dienste), kapseln automatisierungstechnische Funktionen in vielfältiger Gestalt, sowohl verfahrens- als auch fertigungstechnisch.

Von einzelnen Sensor-/Aktor-Funktionen bis hin zur Steuerungsfunktion einer ganzen Anlage kann grundsätzlich alles als Service gekapselt werden.

Ein Service ist eine in software-implementierte Funktion und beschreibt eine Logik, wie eingehende Prozessgrößen zu ausgehenden Prozessgrößen verarbeitet werden. Somit haben Services erstmal keinen direkten Kontakt zum Prozess. Ein solcher Service, der keine direkte Anbindungen an den zu automatisierenden Prozess hat, nennen wir im Folgenden Service Component. Eine Service Component wird auf einer dedizierten Rechner-Kapazität ausgeführt und ist ebenfalls eindeutig addressierbar.

Darüber hinaus besitzt eine Service Component mehrere offene Schnittstellen zur Integration von Control Components, deren Geräte in der Ausführung der automatisierten Funktion definierte Rollen bekommen.

Zusammenfassend hat eine Service Component folgende technische Merkmale
- Keine direkte Anbindung an den Prozess, nur indirekt über angebundenen Control Components
- Software der Service Component läuft auf einer Rechner-Ressource (embedded device, PLC, Edge-Device)
- Standardisierte Kommunikationstechnologie (z.B. OPC UA Server/Client, OPC UA Pub/Sub)
- Standardisierte funktionsorientierte Komponentenschnittstelle (z. B. nach VDI/VDE/NAMUR 2658)
- Die Service Component als funktionale Einheit ist als eine Entität addressierbar (z. B. opc.tcp://192.168.2.1:4840/ns=1:s=Mixing)

Die Service Component Address ist abhängig von der zu Grunde liegende Kommunikationstechnologie.

Eine Control Component repräsentiert ein Automatisierungsgerät und stellt eine Basis-Funktion bereit (Provider).

Eine Service Component repräsentiert eine höherwertige Automatisierungsfunktion und nutzt hierfür Control Components (Consumer). Eine Service Component kann eine noch höhere Automatisierungsfunktion darstellen, die selbst Service Components nutzt (somit ist eine Service Component Provider und Consumer).

Die Adressierung und Integration der Control und Service Components erfolgt über die neu eingeführte Integrationsschicht CAML die den beschriebenen Provider-Consumer Mechanismus umsetzt. Im Folgenden werden drei Varianten beschrieben, welche in vorteilhafter Weise umgesetzt werden.

Der Provider-Consumer-Mechanismus besitzt folgende Merkmale
- Basiert auf einer standardisierten Kommunikationstechnologie
- Basiert auf einer standardisierten Schnittstellendefinition
- Ein Provider und Consumer ist eindeutige als eine Entität addressierbar (Addressierung der Entität nicht der einzelnen Signale)
- Provider und Consumer Interaktion kann sowohl unidirektional als auch bidirektional umgesetzt werden
- Je nach Umsetzung der Interaktion braucht nur eine Seite eine Adresse oder beidseitig sind Adressen zu konfigurieren.
- Eine Control Component besitzt einen Provider Part
- Eine Service Component besitzt einen Consumer Part für die Anbindung von Control und anderen Service Components
- Eine Service Component besitzt auch einen Provider Part.

Das weiter oben beschriebene Prinzip der flexiblen Zuordnung von Sensor-/ Aktor-Logik (gekapselt in Control Modulen) zur funktionalen Logik (gekapselt in Service Modulen) findet in dieser Architektur ebenso Anwendung. So wird Funktionalität, zum Zugriff auf dezentrale Peripherie in Control Components CCs gekapselt. Die Programme der Service Components SC enthalten Platzhalter-CCTs mit entsprechenden Schnittstellen, denen im Zuge des Engineerings des Systems Control Components CC zugeordnet werden können. Auf diese Weise wird entschieden, welche Sensoren und Aktoren tatsächlich im System eingesetzt werden sollen.

### Component Abstraction and Management Layer

Als Erweiterung dieses Ansatzes wird die Einführung des sogenannten Component Abstraction and Management Layer CAML vorgeschlagen. Dieser kann beispielsweise als Systemfunktionalität in einer SPS realisiert werde.

Mittels der neuen Schicht CAML wird es möglich, die dezentrale Intelligenz zu kapseln und als Komponenten mit einer standardisierten Schnittstelle einem Steuerungsprogramm (z. B. einer Service Component SC zur Verfügung zu stellen. Um dies zu realisieren, kann der CAML die folgenden Aufgaben übernehmen:
Abstraktionsfunktionalität:

Der Component Abstraction and Management Layer CAML stellt eine Abstraktionsschicht dar. Diese ist dazu in der Lage, die Funktionalität von Sensoren, Aktoren und ganzen Regelkreisen zu abstrahieren und der funktionalen Logik (in diesem Fall einer Service Component SC) als Komponenten mit standardisierter Schnittstelle zur Verfügung zu stellen. Diese Abstraktionsfunktionalität des CAMLs umfasst dabei die Abbildung einer gegebenenfalls proprietäre Schnittstelle von Control Moduls auf eine standardisierte Schnittstelle und macht somit bzgl. der Abstraktion aus einem CM ein CC.

### Eine standardisierte Schnittstelle kann dabei beispielsweise wie folgt aussehen

Dabei ist zu beachten, dass CCs eine Reihe differenter Funktionalitäten kapseln können.

Dazu gehören verschiedene Sensoren (z. B. zur Temperatur oder Druckmessung), Aktoren (z. B. für die Steuerung von Ventilen oder Antrieben) oder ganze Regelkreise.

Für diese unterschiedlichen Typen von CCs müssen unterschiedliche Schnittstellen bereitgestellt werden, auf die die CC-Funktionalität in geeigneter Weise abstrahiert werden kann. Zu diesem Zweck werden in einer Ausgestaltung die im MTP-Standard Teil 3 [7] beschriebenen Schnittstellen vorgeschlagen.

**Tabelle 5.1 gibt einen Überblick - aus "Interfaces for data objects" spezifiziert in VDI/VDE/NAMUR 2658-3:**

| | |
|---|---|
| Interface Family | Basic Interface (Extension) |
| Analog value displays | AnaView, (AnaMon) |
| Analog value operators | AnaMan, (AnaManInt) |
| Binary value displays | BinView, (BinMon) |
| Binary value operators | BinMan, (BinManInt) |
| Digital value displays | DIntView, (DIntMon) |
| Digital value operators | DIntMan, (DIntManInt) |
| String display | StringView |
| Controls | PIDCtrl |
| Binary Valves | BinVlv, (MonBinVlv) |
| Controllable Valves | AnaVlv, (MonAnaVlv) |
| Binary Drive | BinDrv, (MonBinDrv) |

Falls sich eine einzubindende Control Component CC nicht in derselben Steuerung befindet wie die Service Component SC, wird zudem die Kommunikation zu dieser entfernt liegenden Control Component CC durch den CAML abstrahiert. Auf diese Weise kann eine immer gleiche Ansteuerung von Control Components CC durch die Service Component SC erfolgen, unabhängig davon, wie die Implementierung der CC aussieht oder auf welcher Steuerung diese ausgeführt wird.

### Zuordnungsfunktionalität:

In der als Stand der Technik bekannten Architektur wird die Zuordnung zwischen Control Modul CM und Control Module Type CMT während des Engineering-Prozesses einmal festgelegt und kann anschließend lediglich durch Änderung des Steuerungsprogramms angepasst werden. In der hier vorgeschlagenen neuartigen Architektur ermöglicht der CAML nun eine konfigurierbare Zuordnung zwischen Control Modul CCs und Control Module Type CCT. Somit wird es in vorteilhafter Weise möglich, die in das System eingebundenen Sensoren und Aktoren flexibel zur Laufzeit der Anlage umzukonfigurieren, ohne Steuerungscode anpassen zu müssen. Hierzu ist eine entsprechende Konfigurations- und Laufzeitschnittstelle notwendig. Voraussetzung hierzu ist die Adressierbarkeit der Control Components CC.

### Kommunikationsfunktionalität:

Ist eine Control Component CC nicht in der gleichen Steuerung realisiert wie die Service Component SC, in die sie integriert werden soll, so ist eine Kommunikation zwischen den beiden Steuerungen notwendig. Diese Kommunikationsfunktionalität kann durch den CAML übernommen werden.

Es wird ein Mechanismus zur vereinheitlichten Integration dezentral ausgeführter Logik in ein Automatisierungsprogramm vorgestellt. Die funktionale Abstraktion dieser Logik erfolgt dabei nicht wie bisher auf Basis einzelner Steuersignale, sondern es werden stattdessen Komponenten dem Automatisierungssystem mit einer standardisierten Schnittstelle zur Verfügung gestellt. Diese Schnittstellen können beispielsweise auf den Arbeiten der VDI/VDE/NAMUR 2658, PackML oder der OPC UA Companion Specification beruhen. Mit diesem Ansatz wird der Modularisierungsgedanke für prozesstechnische Anlagen, der im Zuge der VDI/VDE/NAMUR 2658 bereits auf Ebene ganzer Prozessfunktionen umgesetzt ist, auf die Feld- bzw. Einzelsteuerebene ausgeweitet. Dies unterscheidet den hier vor gestellten Mechanismus ebenfalls von der IEC 61499, die ausschließlich auf einzelne Signale und Events beruht.

Zusammenfassend kann gesagt werden, dass folgende Überlegungen zu dem beanspruchten Gegenstand führen:
Die Einzelsteuerebene (Aktoren, Sensoren, Regler) wird von der Equipmentsteuerebene (Automation Services) getrennt.

Die Trennung der Einzelsteuerelemente (Feldgeräte, Sensoren, Aktoren, IO Stationen) von den automatisierungstechnischen Equipment-Funktionen ermöglicht die Trennung des ausführenden Systems. Einzelsteuerelemente können in anderer Speicherprogrammierbaren Steuerung SPS bearbeitet werden als die Equipment-Funktionen.

Eine Kapselung der Einzelsteuerebene erfolgt mit Hilfe einer Funktionalen Schnittstelle: bisher Signal-Integration, neu Thing-Integration, also eindeutig identifizierbarer physischer Objekte.

Die Anbindung von Einzelsteuerelementen in heutigen Systemen erfolgt signalbasiert. Unterschiedliche Geräte werden mit unterschiedlicher Anzahl von Signalen (Eingangs- und Ausgangssignale) angebunden. Diese Varianz erschwert beispielsweise die Austauschbarkeit der Sensoren und Aktoren in hochflexiblen Systemen. Durch die Kapselung auf funktionaler Ebene wird eine Schnittstelle benötigt, die die Varianz auf Signalebene hinter einer funktionalen, immer gleichbleibenden Schnittstelle verbirgt.

Diese Schnittstelle sollte idealerweise standardisiert sein. Hierbei bietet sich die VDI/VDE/NAMUR 2658-3 an.

Die Einführung einer Zwischenschicht, im Weiteren auch "Component Abstraction and Management Layer" (CAML) genannt, verspricht die Handhabung der sogenannten "Things" vergleichbar zu Signalen.

Heutige Systeme unterliegen einer dedizierten Hardware-Konfiguration, die wiederum Informationen ableitet, die für die Konfiguration der deterministischen Bussysteme genutzt werden. Im Zuge immer leistungsfähigerer Netzwerktechnik, kommen vermehrt IP-basierte Protokolle zum Einsatz. Eine hohe Flexibilität wird nur dann erreichbar sein, wenn die starre Kopplung zwischen Hardware und Software gelöst wird. Diese Aufgabe übernimmt in vorteilhafter Weise die vorgeschlagene Zwischenschicht Component Abstraction and Management Layer CAML. Dieser dient als Vermittler zwischen Equipment Funktionen (Service Components) und Einzelsteuer-Funktionen (Control Components)

Die Lösung wird im Folgenden auch in Form eines Ausführungsbeispiels aufgezeigt.

Die Erfindung wird dabei durch die Figuren dargestellt, wobei die in den Figuren aufgeführten Ausführungsbeispiele keine Einschränkung der Erfindung darstellen sollen.

Dabei zeigt
- Figur 1: eine Beispielanlage mit Gegenüberstellung Konzept OPAS / MTP,
- Figur 2: Gegenüberstellung mit übertragenen Werten,
- Figur 3: Architekturvarianten zur Realisierung eines CAML,
- Figur 4: Ausführungsbeispiel mit 2 Temperatur-Sensoren, und
- Figur 5: zum Vergleich das Architekturkonzept gemäß dem Stand der Technik.

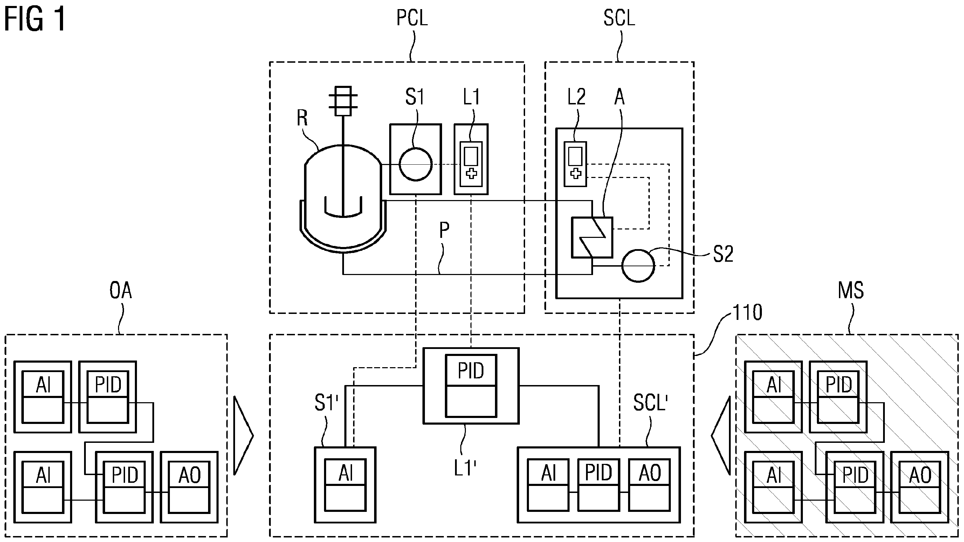

Figur 1 zeigt eine beispielhafte Automatisierunganlage welche aus einem ersten Regelkreis PCL besteht, der einen Reaktor R umfasst und einen ersten Sensor S1, zur Messung einer Temperatur in dem Reaktor. Diese Messwerte werden in der Steuerung L1 abgenommen. Durch eine Pipeline P ist der Inhalt des Reaktors R durch eine Heizeinrichtung A pumpbar, welche die Temperatur des im Reaktor enthaltenen Inhalts erhöht (oder ggf. erniedrigt). Diese Pipeline weist einen zweiten Sensor S2 auf, welcher mit einer eigenen Steuerung L2 verbunden ist. Hier handelt es sich um einen zweiten Regelkreis SCL.

Unter der beispielhaften Anordnung ist nun im Vergleich angeordnet, wie die Steuerung und die Messdaten verwendet werden. Auf der linken Seite im ersten Kaste OA ist eine Verwendung gemäß des oben bereit beschriebenen Standards OPAS, OA aufgezeigt. Es handelt sich um die Funktionsblöcke AI für Input, AO für Output und Steuerkreise PID.

Auf der rechten Seite ist im Vergleich dazu die Anordnung gemäß dem MTP Service MS aufgezeigt. Die hier enthaltenen Funktionsblöcke sind dabei dahingehend gekapselt, dass in einer Art Black Box diese von Außen nicht zugänglich sind, und nicht auf Element-Ebene sondern nur auf Funktionsebene ansprechbar.

Der Mittlere Kasten 110 zeigt nun die erfindungsgemäße Lösung welche auch zeigt, dass eine Modularität in verschiedenen Abstufungen möglich ist: der linke Kasten S1' bezieht sich dabei ausschließlich auf den linken Sensor S1, der rechte Kasten SCL' bezieht sich auf die komplette Regelungsschleife unter SCL, welche dann weitere Unterelemente AI, PID, AO aufweist.

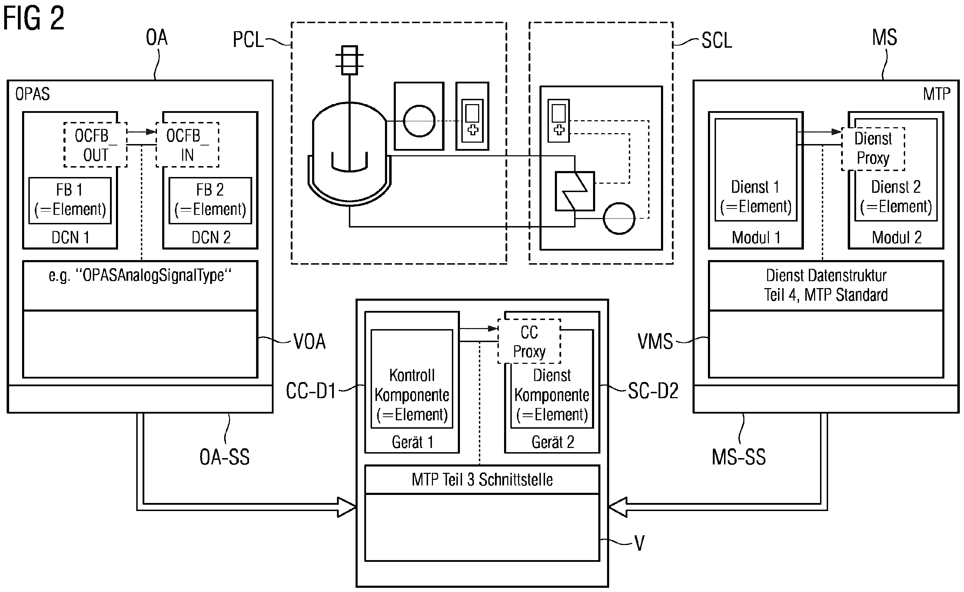

Figur 2 zeigt noch einmal denselben Aufbau eines beispielhaften Automatisierungssystems mit den zwei Regelungsschleifen PCL und SCL. Die Kästen OA und MS beziehen sich dabei wieder auf die Lösung gemäß der Standards OPAS (signalorientiert) respektive MTS (Funktionsorientiert).

Auf der linken Seite sieht man verwendete Variablen wie
- Value
- Engineering Unit
- Range
- Simulation Value, oder
- Simulation State.

Auf der rechten Seite sieht man entsprechend Werte
- WQC (Worst Quality Code, aus dem Namur Standard)
- Command
- Procedure
- State.

Diese Darstellung soll die Interoperabilität der vorgeschlagenen komponentenfokussierten Lösung aufzeigen, in dem verschiedene mögliche Realisierungen aufgezeigt werden.

Figur 3 zeigt drei verschiedene Realisierungsvarianten des CAML-Ansatzes auf, wobei der CAML unterschiedliche der zuvor aufgezeigten Aufgaben übernimmt. Es ist eine beliebige Kombination dieser Varianten in einem System möglich.

Die unteren Schichten SAL, PAE. PAA und HWC sind dabei identisch zu Figur 5 und zu den bereits weiter oben beschriebenen Schichten.

Variante 1: Bei dieser Variante werden eine Service Component SC 1 sowie die zu integrierende Control Component CC 2 in der gleichen Steuerung ausgeführt. Eine Kommunikation über Controllergrenzen hinweg ist in diesem Fall nicht notwendig. Es gilt allerdings, die CC-Funktionalität auf ein standardisiertes Interface abzubilden und dem gewünschten CCT (CCT b) in der SC zuzuordnen. Somit übernimmt der CAML eine Abstraktions- sowie Zuordnungsfunktionalität. Diese Varianten ähnelt der bekannten Architektur mit dem Unterschied, dass nun der CAML als Abstraktionsebene hinzugefügt wurde und damit eine konfigurierbare Zuordnung zwischen CCs und CCTs möglich wird.

Variante 2: In einer weiteren Variante zeigt eine CC (CC 1), welches in einer anderen Steuerung ausgeführt wird als die SC (SC 1), in die die integriert werden soll. In diesem Fall ist eine controllerübergreifende Kommunikation notwendig, um Daten zwischen der CC (CC 1) und dem CCT (CCT a) zu auszutauschen. Diese Kommunikation wird bei dieser Variante allerding nicht über den CAML, sondern über einen Provider-Consumer-Ansatz übernommen. Dieser sieht einen Provider-Baustein (Prov) sowie einen Consumer-Baustein (Cons) vor. Der Prov besitzt die Aufgabe, die Funktionalität der CCs zu abstrahieren und auf ein standardisiertes Interface abzubilden, sofern die Control Module CM nicht bereits ein standardisiertes Interface mitbringt. Zudem werden Prov und Cons dazu verwendet, eine Kommunikationsverbindung aufzubauen und somit die Daten der CC in der Steuerung bereitzustellen, in der die SC realisiert ist. Der Cons stellt dabei eine Repräsentanz der CC-Funktionalität dar und kann derart verwendet werden, als wäre die CC selbst in dieser Steuerung implementiert. Diese Kommunikation wird hinter dem CAML abstrahiert. Zudem übernimmt der CAML wie in Variante 1 die Zuordnungsfunktionalität zwischen CC (CC 1) und CCT (CCT a).

Variante 3: Wie in Variante 2 werden auch in diesem Fall die Service Component SC 1 und die zu integrierende Control Component CC 3 in verschiedenen Steuerungen ausgeführt. Somit ist auch bei dieser Variante eine controllerübergreifende Kommunikation notwendig. Im Gegensatz zu Variante 2 wird diese Kommunikationsfunktionalität in diesem Fall allerdings durch den CAML selbst ausgeführt. In der Steuerung, in der die CC realisiert ist, ist ein CAML implementiert, welcher die CC-Funktionalität falls notwendig auf ein standardisiertes Interface abbildet. Dieser CAML besitzt die Möglichkeit mit dem CAML der Steuerung zu kommunizieren, auf dem die SC realisiert ist. Auf diese Weise ist dem CAML wiederum möglich, die Funktionalität der CC zu abstrahieren und als Komponente mit standardisiertem Interface der SC zur Verfügung zu stellen. Anschließend kann diese Komponente durch den CAML wie in den vorherigen beiden Fällen auch einem CCT zugeordnet werden. Somit übernehmen die beiden CAMLs in diesem Fall sowohl die Abstraktions- und Zuordnungsfunktionalität als auch die Kommunikationsfunktionalität.

Aus Sicht des Hauptprogrammes (in diesem Fall die SC) ist es irrelevant, welche der zuvor beschriebenen Varianten in einem System umgesetzt sind. Durch die Abstraktionsfunktionalität, welche in allen Varianten durch den CAML zur Verfügung gestellt wird, werden der SC in jedem Fall Komponenten mit standardisiertem Interface bereitgestellt, die integriert werden können. Ob die CCs sich auf der gleichen Steuerung wie die SC befinden (Variante 1) oder auf andere Steuerungen ausgelagert sind (Varianten 2 und 3) ist und wie die genaue Implementierung der der CCs realisiert ist, ist für die SC dabei unerheblich. Dies bietet den Vorteil, dass flexibel zwischen den vorgestellten Varianten gewechselt werden kann. Weist beispielsweise ein controllerintern angebundener Sensor (Variante 1) einen Fehler auf, so kann ohne Probleme ein externer Sensor beispielsweise mittels der Variante 3 angebunden werden, der den fehlerhaften Sensor temporär oder dauerhaft ersetzt.

### Konfigurations- und Laufzeitschnittstelle

Wie bereits weiter oben beschriebenen existiert auch in der hier vorgeschlagenen Architektur eine Konfigurations- und Laufzeitschnittstelle, welche zur Parametrierung und Aussteuerung der Service Components dient. Zusätzlich ist es notwendig, eine Schnittstelle vorzusehen, welche die Konfiguration des CAML übernimmt. Diese Schnittstelle dient zur Festlegung, welche Control Components welchen CCTs zugeordnet werden sollen. Sie kann beispielsweise mittels eines OPC UA Server umgesetzt werden.

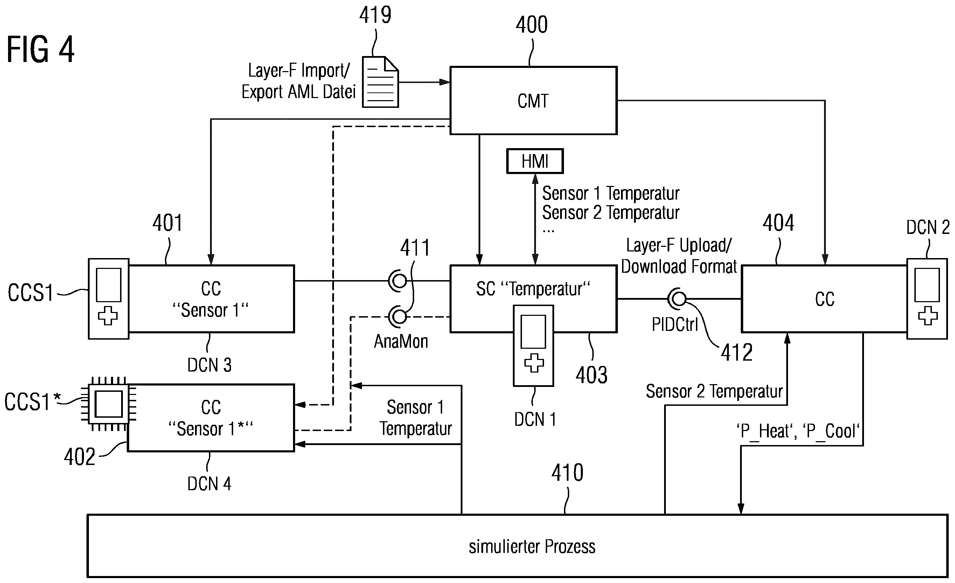

In der Figur 4 wird ein explizites Ausführungsbeispiel unter Verwendung von fiktiven Werten näher erläutert, basierend auf der Beispielanlage, die weiter oben bereits beschrieben wurde. Im Folgenden soll von einem ersten Temperatursensor CCS1 auf einen alternativen zweiten Temperatursensor CCS1* umkonfiguriert werden.

Die Konfigurierungen werden durch ein Configuration Management Tool 400 durchgeführt, die benötigten Werte werden durch ein Konfiguration File 419 (Layer-F Import/Export AML file) zur Verfügung gestellt.

Die beiden Control Componenten Sensor1 und Sensor 1* sind eine Control Component als AnaMon-Provider

Die Steuerung des Verfahrens "Tempering" (SC) 403, erfolgt durch den Distributed Control Node DCN1 "Reactor", welche mit geeigneten Schnittstellen 411, AnaMon, Verbindung aufnimmt zu den Sensoren und Steuerungen DCN3, DCN4.

### SC Tempering Consumer

AnaMon-Con.: opc.tcp://192.168.2.50:4840/ns=3:s="TREAC"
PIDCtrl-Con.: opc.tcp://192.168.2.50:4840/ns=3:s="TEMPC"
SC Tempering besitzt einen AnaMon-Consumer für die Ist-Temperatur-Erfassung im Reaktor und einem PIDCtrl-Consumer für eine Vorlauf-Temperatur-Regelung.
Consumer = CC Anforderung / Platzhalter
Die Control Component "CC Sensor 1" 401 besitzt einen Provider (Anbieter), der adressierbar ist unter
{opc.tcp://192.168.2.10:4840/ns=3:s="TI001"}.
Die Control Component "CC Sensor 1*" 402 besitzt einen Provider, der adressierbar ist unter
{opc.tcp://192.168.2.11:4840/ns=3:s="TI002"}.
Die Control Component "PID Ctrl" 404 besitzt einen Provider, der adressierbar unter
{opc.tcp://192.168.2.20:4840/ns=3:s="TIC101"}
Die Service Component "Tempering" 403 besitzt zwei Consumer (Nutzer), die wie folgt adressierbar sind:
   - AnaMon-Consumer in 411 der Rolle Reaktor-Ist-Temperatur unter: {opc.tcp://192.168.2.50:4840/ns=3:s="TREAC"}
   - PIDCtrl-Consumer 412 in der Rolle Reaktor-Vorlauf-Temperatur unter:
      {opc.tcp://192.168,2.50:4840/ns=3:s="TEMPC"}
      Die Provider-Funktion des Service ist in der Figur nicht explizit dargestellt.

Zur Zusammenführung eines Provider-Consumer-Beziehung ist nun an dem entsprechenden Partner die jeweils andere Adresse zu konfigurieren.

AnaMon-Consumer Konfiguration des Providers:
{opc.tcp://192.168.2.10:4840/ns=3:s="TI001"}

AnaMon-Provider Konfiguration des Consumers:
{opc.tcp://192.168.2.50:4840/ns=3:s="TREAC"}

PIDCtrl-Consumer Konfiguration des Providers:
{opc.tcp://192.168.2.20:4840/ns=3:s="TIC101"}

PIDCtrl-Provider Konfiguratio des Consumers:
{opc.tcp://192.168,2.50:4840/ns=3:s="TEMPC"}

Somit wurden folgende Relationen neu konfiguriert:
Tempering.TREAC nutzt "TI001"
Tempering.TEMPC nutzt "TIC101"

Im vorliegenden Beispiel wurde eine aktive bidirektionale Implementierung gewählt. Das bedeutet, jeweils der Consumer als auch der Provider hat die zu verarbeitenden Werte von seinem Partner gelesen (in OPC UA ist Lesen der aktive Teil der Kommunikation) .

Somit konnte die Relation auch beidseitig überwacht werden. Nach Aktivierung der Interaktion hat die kaskadierte Regelung des Reaktor-Temperieren-Beispiels funktioniert.

### Generalisierung des CAML-Ansatzes

Zusammenfassend lässt sich sagen, dass der CAML-Ansatz eine Automatisierungssoftware in zwei Teile untergliedert - die hardwarespezifische Logik (in diesem Fall die CCs) und die funktionsspezifische Logik (in diesem Fall die SCs). Der CAML besitzt im Wesentlichen die Aufgabe, die hardwarespezifische Logik hinsichtlich ihrer konkreten Ausprägung und dem Ort ihrer Ausführung zu abstrahieren und in Form von Komponenten mit standardisierten Interfaces der funktionsspezifischen Logik zur Verfügung zu stellen. Eine mögliche Realisierung dieser Idee wurde im Rahmen dieser Erfindungsmeldung anhand einer Architektur angelehnt an die Richtlinie VDI/VDE/NAMUR 2658 aufgezeigt.

Allerdings ist der CAML-Ansatz nicht nur auf die Konzepte modularer Anlagen anwendbar. Auch in klassischen SPS-Programmen bieten das in dieser Erfindungsmeldung vorgestellte Konzept Mehrwerte. Es schafft eine Möglichkeit, intelligente Geräte, deren Funktionalität als dezentrale Intelligenz direkt im Feld realisiert sind, schnell, einfach und flexibel in den Steuerungscode zu integrieren.

Eine solches Integrationsmechanismus für dezentrale Intelligenz stellt sich als zukunftsweisend dar und steht im Einklang mit aktuell aufkommenden Trends. So stützt sich beispielsweise der Ansatz des Industrial Internet of Things (IIoT) stark darauf, die Zugriffslogik für Sensoren und Aktoren direkt im Feld mittels intelligenter Geräte zu realisieren. Dies macht eine Integration dezentraler Intelligenz in ein SPS-Programm unabdingbar. Auch der Open Process Automation Standard (OPAS) [6] setzt verstärkt darauf, Automatisierungsfunktionalität sehr kleinteilig auf eine Vielzahl von Distributed Control Nodes (DCNs) zu verteilen. Dezentrale Intelligenz wird in den Fokus gesetzt und es bedarf einem entsprechenden Integrationsmechanismus.

Im Hinblick auf einen künftigen Einsatz des vorgestellten Konzeptes im industriellen Umfeld gilt es, eine sinnvolle Möglichkeit zum Engineering des CAML zu entwerfen. Dieser Entwurf steht noch aus. Ein Ansatz ist die Einführung eines neuen Tag-Types. In heutigen Engineering-Tools stehen als Tag-Types in der Regel Inputs, Outputs und Merker zur Verfügung. Künftig könnte zusätzlich auch ein Tag-Type "Component" existieren, welcher die Einbindung ganzer im Feld dezentral implementierter intelligenter Komponenten ermöglicht.

In der Beschreibungseinleitung wurde aufgezeigt, welche Herausforderungen in heutigen Automatisierungssystemen in Bezug auf die fünf Befähigungsmerkmale für Wandelbarkeit bestehen. Im Folgenden soll noch einmal zusammen gefasst werden, wie mittels des beschriebenen Ansatzes diese Herausforderungen bewältigt werden kann.

Die Abstraktion von Sensor- und Aktor-Zugriffslogik und deren Abbildung auf ein standardisiertes Interface ist vorgesehen. So wird beispielsweise jedes Ventil durch die gleiche Schnittstelle repräsentiert, unabhängig davon, wie die Ventilfunktion im Detail implementiert ist und ob ein Rückmeldesignal vorhanden ist oder nicht. Sensoren/ Aktoren verschiedener Typen (z. B. verschiedene Ventilarten) können somit in gleicher Art in das Automatisierungssystem integriert werden und es ist eine Austauschbarkeit gegeben, die dem Wandlungsbefähiger der Universalität entgegenkommt.

Durch die universelleren Schnittstellen der Sensor- und Aktor-Funktionalitäten ist es auf Basis des beschriebenen Gegenstands zudem leicht möglich, leistungsstärkere oder komplexere Sensorik und Aktorik in das Automatisierungssystem einzubinden, was die Skalierbarkeit begünstigt.

Durch den Einsatz einheitlicher standardisierter Interfaces (z. B. ein Interface für alle Ventiltypen, ein Interface für alle Motortypen) kann eine Kompatibilität auch über verschiedene Sensor- und Aktor-Typen hinweg sichergestellt werden.

Im vorgestellten Konzept wird weiterhin eine dezentrale Realisierung der Logik zum Zugriff auf Sensoren und Aktoren vorgeschlagen. Somit wird diese Logik direkt im Feld, z. B. auf einer Kleinststeuerung oder einem Mikrocontroller direkt am Sensor oder Aktor ausgeführt. Somit bringen Sensoren und Aktoren alle Logik mit, die zu ihrer Ansteuerung notwendig ist. Eine einfachere Verlagerung eines Sensors und Aktors an eine andere Stelle der Anlage ist damit einfach möglich. Dies begünstig den Wandlungsbefähiger der Mobilität.

Der CAML-Ansatz realisiert eine Abstraktion von Sensor-/ Aktor-Zugriffslogik in standardisierte Komponenten. Auf diese Weise wird der Gedanke der Modularität auf die Feld- bzw. Einzelsteuerebene erweitert.

Es wird deutlich, dass auf Basis des vorgestellten Konzeptes die Herausforderungen in Bezug auf die Wandlungsbefähiger von Prozessanlagen bewältigt werden können. Somit ist eine Wandelbarkeit nicht mehr nur auf Ebene der Modularen Prozesseinheiten PEA möglich wie im Architekturkonzept der VDI/VDE/NAMUR 2658 beschrieben, sondern auch auf Ebene der Einzelsteuereinheiten, d. h. der Aktorik, Sensorik und Regelkreise.

Ein weiterer Vorteil zeigt sich in der vorgeschlagenen dezentralen Realisierung der Zugriffslogik für Sensoren und Aktoren. Dies impliziert eine Trennung von funktionsspezifischer (z. B. SC) und hardwarespezifischer Logik (z. B. CC). Aus dieser Trennung ergibt sich eine Reihe weiterer Vorteile.

Die Wiederverwendbarkeit der funktionsspezifischen Logik kann gesteigert werden und die Updatefähigkeit funktionsspezifischer Logik kann verbessert werden.

Der Freiheitsgrade in der Ausgestaltung der Hardware bzw. der Prozessanbindung kann gesteigert werden.

Durch die Einführung einer Trennung zwischen gerätespezifische und funktionsspezifische Logik kann das Engineering beider Logikanteile weitgehend unabhängig voneinander durchgeführt werden.

Funktionsorientierte Logik kann damit extern als preengineerte und pre-getestete Komponente zugeliefert werden.

Gerätespezifische Logik kann pre-engineert durch die Firmware der Geräte bereitgestellt werden.

Durch die Ausführung funktionsspezifischer Logik auf zentralen Rechnersystemen (vgl. z. B. OPAS ACP) kann eine Realisierung mehrerer "virtueller" Module/Skids/PUs auf einer Hardware realisiert werden. Dann ergeben sich die folgenden Vorteile :
Die Kosten für den Maschinen- bzw. Modulbauer werden reduziert. Es wird Flexibilität durch skalierbare PLC-Ressourcen geschaffen. Eine Trennung von geräte- und funktionsspezifischer Logik ermöglicht eine Verteilung der Logikanteile auf verschiedene Geräte. Es ist eine effiziente Ausnutzung von Geräte-Ressourcen möglich, indem ein Teil der Logik, der bisher auf PLC-Ressourcen ausgeführt wurde dezentral auf Geräte-Ressourcen ausgeführt wird. Im Fehlerfall ist ein Austausch defekter Geräte einfach möglich.

Durch die Einführung standardisierter Komponenten-Interfaces kann es zu Einschränkungen in der Diagnose der dezentralen Peripherie kommen. Es können lediglich die Informationen aus der Komponente ausgelesen werden, die auch im standardisierten Interface vorgesehen sind.

Zudem ist eine systemübergreifende Hardware-Konfiguration zum Zeitpunkt des Engineerings nicht mehr realisierbar, da die Möglichkeit besteht, schnell und einfach dezentrale Peripherie zur Laufzeit auszutauschen. Somit gilt es, neue Ansätze für die Konfiguration der Hardware in derart flexiblen Systemen zu schaffen.

## Patentansprüche

1. Verfahren in einem verteilten Automatisierungssystem umfassend zumindest ein physikalisches Element (S1, S2, A, R), zur Kopplung der funktionalen Steuerung des Automatisierungssystems, unter Verwendung von zumindest einer Automatisierungsfunktion, an die physikalischen Elemente, wobei das Automatisierungssystem eine Automatisierungssoftware umfasst, die in zwei Teile untergliedert wird: eine hardwarespezifische Logik für die zumindest eine Kontrollkomponente (CC) und eine funktionsspezifische Logik für die zumindest eine Dienstkomponente (SC),
mit folgenden Schritten:
- Abstraktion der Funktionalität des physikalischen Elements (S1, S2, A, R) in einer Kontrollkomponente (CC1, CC2, CC3) und Abbildung einer realen Schnittstelle des physikalischen Elements auf eine zuvor standardisierte Schnittstelle,
- Zuordnung von dem physikalischen Element (CC1, CC2, CC3) zu einem Platzhalter (CCT) der die gleiche standardisierte Schnittstelle aufweist wie das physikalische Element,
- Kapselung der zumindest einen Automatisierungsfunktion in einer Dienstkomponente (SC), die zumindest eine erste Schnittstelle (133, 134, 135) zu dem physikalischen Element (CC1, CC2, CC3) und zumindest eine weitere Kommunikationsschnittstelle aufweist,
- Kommunikation zwischen dem physikalischen Element (CC1, CC2, CC3) und der Dienstkomponente (SC) oder dem Platzhalter (CCT),
- wobei eine Konfiguration eines physikalischen Elements (CC1, CC2, CC3) jederzeit während der Laufzeit des Automatisierungssystems durch die Kommunikationsschnittstelle (100) durchgeführt werden kann.

2. Verfahren gemäß Patentanspruch 1,
**dadurch gekennzeichnet, dass**
das physikalische Element die Funktionalität eines Sensors oder Aktors in dem Automatisierungssystem umfasst.

3. Verfahren gemäß einem der vorherigen Patentansprüche,
**dadurch gekennzeichnet, dass**
die standardisierte Schnittstelle nach dem Standard VDI/VDE/NAMUR 2658 definiert ist.

4. Verfahren gemäß einem der vorherigen Patentansprüche,
**dadurch gekennzeichnet, dass**
die Kommunikationsschnittstelle (100) gemäß dem Standard OPC-UA arbeitet.

5. Verfahren gemäß einem der vorherigen Patentansprüche,
**dadurch gekennzeichnet, dass**
die Dienstkomponente (SC) zumindest eine Schnittstelle zu weiteren Dienstkomponenten (SC1) aufweist für eine übergeordnete Automatisierungsfunktion, die auf untergeordnete in der weiteren Dienstkomponente gekapselte Automatisierungsfunktionen zugreift.

6. Vorrichtung (CAML) zur Kopplung der funktionalen Steuerung in einem verteilten Automatisierungssystem, unter Verwendung von zumindest einer Automatisierungsfunktion, wobei das Automatisierungssystem eine Automatisierungssoftware umfasst, die in zwei Teile untergliedert wird: eine hardwarespezifische Logik für die zumindest eine Kontrollkomponente (CC) und eine funktionsspezifische Logik für die zumindest eine Dienstkomponente (SC), und
in dem Automatisierungssystem umfassend physikalische Elemente (S1, S2, A, R), mit
- zumindest einer Kontrollkomponente (CC1, CC2, CC3) welche eine Abstraktion der Funktionalität des physikalischen Elements (S1, S2, A, R) umfasst und eine Abbildung einer realen Schnittstelle des physikalischen Elements auf eine zuvor standardisierte Schnittstelle, wobei das physikalische Element (CC1, CC2, CC3) einem Platzhalter (CCT) zuweisbar ist der die gleiche standardisierte Schnittstelle aufweist wie das physikalische Element, und
- zumindest eine Dienstkomponente (SC), welche eine Kapselung der zumindest einen Automatisierungsfunktion aufweist und zumindest eine Schnittstelle (133, 134, 135) zu dem physikalischen Element (CC1, CC2, CC3) und zumindest eine weitere Kommunikationsschnittstelle umfasst, die eine Kommunikation zwischen dem physikalischen Element (CC1, CC2, CC3) und der Dienstkomponente (SC) ermöglicht,
- wobei eine Konfiguration der Vorrichtung (CAML) jederzeit während der Laufzeit des Automatisierungssystems durch die Kommunikationsschnittstelle (100) durchgeführt werden kann.

7. Vorrichtung gemäß Patentanspruch 6,
**dadurch gekennzeichnet, dass**
das physikalische Element die Funktionalität eines Sensors oder Aktors in dem Automatisierungssystem umfasst.

8. Vorrichtung gemäß einem der vorherigen Patentansprüche 6 oder 7,
**dadurch gekennzeichnet, dass**
die standardisierte Schnittstelle nach dem Standard VDI/VDE/NAMUR 2658 definiert ist.

9. Vorrichtung gemäß einem der vorherigen Patentansprüche 6 bis 8,
**dadurch gekennzeichnet, dass**
die Kommunikationsschnittstelle (100) gemäß dem Standard OPC-UA arbeitet.

10. Vorrichtung gemäß einem der vorherigen Patentansprüche 6 bis 9,
**dadurch gekennzeichnet, dass**
das zumindest eine physikalischen Element (CC2) und die zugehörige Kontrollkomponente (SC1) in der gleichen Steuerung (110) ausgeführt werden (Variante 1) und eine Kommunikation zwischen Kontrollkomponente und Steuerungskomponente mittels steuerungsinterner Schnittstellen (133, 134) erfolgt.

11. Vorrichtung gemäß einem der vorherigen Patentansprüche 6 bis 9,
**dadurch gekennzeichnet, dass**
das zumindest eine physikalischen Element (CC1) und die zugehörige Kontrollkomponente (SC1) nicht in der gleichen Steuerung (110) ausgeführt werden (Variante 2), und eine Kommunikation zwischen Kontrollkomponente und Steuerungskomponente über ein steuerungsübergreifende Schnittstelle mittels eines Provider-Consumer-Ansatzes erfolgt.

12. Vorrichtung gemäß einem der vorherigen Patentansprüche 6 bis 9,
**dadurch gekennzeichnet, dass**
das zumindest eine physikalischen Element (CC3) und die zugehörige Kontrollkomponente (SC1) nicht in der gleichen Steuerung (110) ausgeführt werden (Variante 3), und eine Kommunikation zwischen Kontrollkomponente und Steuerungskomponente über ein steuerungsübergreifende Schnittstellen (131, 132, 135) erfolgt

## Claims

1. Method in a distributed automation system, comprising at least one physical element (S1, S2, A, R), for coupling the functional control of the automation system to the physical elements using at least one automation function, wherein the automation system comprises automation software which is subdivided into two parts: hardware-specific logic for the at least one monitoring component (CC) and function-specific logic for the at least one service component (SC),
having the following steps of:
- abstracting the functionality of the physical element (S1, S2, A, R) in a monitoring component (CC1, CC2, CC3) and mapping a real interface of the physical element to a previously standardized interface,
- assigning the physical element (CC1, CC2, CC3) to a placeholder (CCT) having the same standardized interface as the physical element,
- encapsulating the at least one automation function in a service component (SC) having at least one first interface (133, 134, 135) to the physical element (CC1, CC2, CC3) and at least one further communication interface,
- communicating between the physical element (CC1, CC2, CC3) and the service component (SC) or the placeholder (CCT),
- wherein a physical element (CC1, CC2, CC3) can be configured at any time during the runtime of the automation system by means of the communication interface (100).

2. Method according to Claim 1,
**characterized in that**
the physical element comprises the functionality of a sensor or actuator in the automation system.

3. Method according to one of the preceding claims,
**characterized in that**
the standardized interface is defined according to the VDI/VDE/NAMUR 2658 standard.

4. Method according to one of the preceding claims,
**characterized in that**
the communication interface (100) operates according to the OPC UA standard.

5. Method according to one of the preceding claims,
**characterized in that**
the service component (SC) has at least one interface to further service components (SC1) for a superordinate automation function which accesses subordinate automation functions encapsulated in the further service component.

6. Apparatus (CAML) for coupling the functional control in a distributed automation system using at least one automation function, wherein the automation system comprises automation software which is subdivided into two parts: hardware-specific logic for the at least one monitoring component (CC) and function-specific logic for the at least one service component (SC), and
in the automation system comprising physical elements (S1, S2, A, R), having
- at least one monitoring component (CC1, CC2, CC3) which comprises an abstraction of the functionality of the physical element (S1, S2, A, R) and a mapping of a real interface of the physical element to a previously standardized interface, wherein the physical element (CC1, CC2, CC3) can be assigned to a placeholder (CCT) having the same standardized interface as the physical element, and
- at least one service component (SC) which has an encapsulation of the at least one automation function and comprises at least one interface (133, 134, 135) to the physical element (CC1, CC2, CC3) and at least one further communication interface, which enables communication between the physical element (CC1, CC2, CC3) and the service component (SC),
- wherein the apparatus (CAML) can be configured at any time during the runtime of the automation system by means of the communication interface (100).

7. Apparatus according to Claim 6,
**characterized in that**
the physical element comprises the functionality of a sensor or actuator in the automation system.

8. Apparatus according to either of the preceding Claims 6 and 7,
**characterized in that**
the standardized interface is defined according to the VDI/VDE/NAMUR 2658 standard.

9. Apparatus according to one of the preceding Claims 6 to 8,
**characterized in that**
the communication interface (100) operates according to the OPC UA standard.

10. Apparatus according to one of the preceding Claims 6 to 9,
**characterized in that**
the at least one physical element (CC2) and the associated monitoring component (SC1) are implemented in the same controller (110) (variant 1), and communication takes place between the monitoring component and the control component by means of interfaces (133, 134) inside the controller.

11. Apparatus according to one of the preceding Claims 6 to 9,
**characterized in that**
the at least one physical element (CC1) and the associated monitoring component (SC1) are not implemented in the same controller (110) (variant 2), and communication takes place between the monitoring component and the control component via a cross-controller interface by means of a provider/consumer approach.

12. Apparatus according to one of the preceding Claims 6 to 9,
**characterized in that**
the at least one physical element (CC3) and the associated monitoring component (SC1) are not implemented in the same controller (110) (variant 3), and communication takes place between the monitoring component and the control component via a cross-controller interface (131, 132, 135).

## Revendications

1. Procédé dans un système d'automatisation distribué comprenant au moins un élément physique (S1, S2, A, R), pour coupler la commande fonctionnelle du système d'automatisation, en utilisant au moins une fonction d'automatisation, aux éléments physiques, dans lequel le système d'automatisation comprend un logiciel d'automatisation divisé en deux parties : une logique spécifique au matériel pour le au moins un composant de contrôle (CC) et une logique spécifique à la fonction pour le au moins un composant de service (SC),
comprenant les étapes suivantes :
- l'abstraction de la fonctionnalité de l'élément physique (S1, S2, A, R) dans un composant de contrôle (CC1, CC2, CC3) et le mappage d'une interface réelle de l'élément physique sur une interface préalablement standardisée,
- l'affectation de l'élément physique (CC1, CC2, CC3) à un substitut (CCT) ayant la même interface standardisée que l'élément physique,
- l'encapsulation de la au moins une fonction d'automatisation dans un composant de service (SC), qui présente au moins une première interface (133, 134, 135) avec l'élément physique (CC1, CC2, CC3) et au moins une autre interface de communication,
- la communication entre l'élément physique (CC1, CC2, CC3) et le composant de service (SC) ou le substitut (CCT),
- dans lequel une configuration d'un élément physique (CC1, CC2, CC3) peut être effectuée à tout moment par l'interface de communication (100) pendant la durée de fonctionnement du système d'automatisation.

2. Procédé selon la revendication 1, **caractérisé en ce que** l'élément physique comprend la fonctionnalité d'un capteur ou d'un actionneur dans le système d'automatisation.

3. Procédé selon l'une des revendications précédentes, **caractérisé en ce que** l'interface standardisée est définie selon la norme VDI/VDE/NAMUR 2658.

4. Procédé selon l'une des revendications précédentes, **caractérisé en ce que** l'interface de communication (100) fonctionne selon la norme OPC-UA.

5. Procédé selon l'une des revendications précédentes, **caractérisé en ce que** le composant de service (SC) présente au moins une interface vers d'autres composants de service (SC1) pour une fonction d'automatisation de niveau supérieur qui accède à des fonctions d'automatisation subordonnées encapsulées dans l'autre composant de service.

6. Dispositif (CAML) pour coupler la commande fonctionnelle dans un système d'automatisation distribué, en utilisant au moins une fonction d'automatisation, dans lequel le système d'automatisation comprend un logiciel d'automatisation qui est divisé en deux parties : une logique spécifique au matériel pour le au moins un composant de contrôle (CC) et une logique spécifique à la fonction pour le au moins un composant de service (SC), et dans le système d'automatisation, comprenant des éléments physiques (S1, S2, A, R), avec
- au moins un composant de contrôle (CC1, CC2, CC3) qui comprend une abstraction de la fonctionnalité de l'élément physique (S1, S2, A, R) et une reproduction d'une interface réelle de l'élément physique sur une interface préalablement standardisée, dans lequel l'élément physique (CC1, CC2, CC3) peut être affecté à un substitut (CCT) qui présente la même interface standardisée que l'élément physique, et
- au moins un composant de service (SC) qui présente une encapsulation de la au moins une fonction d'automatisation et comprend au moins une interface (133, 134, 135) vers l'élément physique (CC1, CC2, CC3) et au moins une autre interface de communication qui permet une communication entre l'élément physique (CC1, CC2, CC3) et le composant de service (SC),
- dans lequel une configuration du dispositif (CAML) peut être effectuée à tout moment par l'interface de communication (100) pendant la durée de fonctionnement du système d'automatisation.

7. Dispositif selon la revendication 6, **caractérisé en ce que** l'élément physique comprend la fonctionnalité d'un capteur ou d'un actionneur dans le système d'automatisation.

8. Dispositif selon l'une des revendications 6 ou 7 précédentes, **caractérisé en ce que** l'interface standardisée est définie selon la norme VDI/VDE/NAMUR 2658.

9. Dispositif selon l'une des revendications 6 à 8 précédentes, **caractérisé en ce que** l'interface de communication (100) fonctionne selon la norme OPC-UA.

10. Dispositif selon l'une des revendications 6 à 9 précédentes, **caractérisé en ce que** le au moins un élément physique (CC2) et le composant de contrôle (SC1) correspondant sont exécutés dans la même commande (110) (variante 1), et une communication entre le composant de contrôle et le composant de commande a lieu au moyen d'interfaces (133, 134) internes à la commande.

11. Dispositif selon l'une des revendications 6 à 9 précédentes, **caractérisé en ce que** le au moins un élément physique (CC1) et le composant de contrôle (SC1) correspondant ne sont pas exécutés dans la même commande (110) (variante 2), et une communication entre le composant de contrôle et le composant de commande a lieu via une interface inter-contrôleurs au moyen d'une approche fournisseur-consommateur.

12. Dispositif selon l'une des revendications 6 à 9 précédentes, **caractérisé en ce que** le au moins un élément physique (CC3) et le composant de contrôle (SC1) correspondant ne sont pas exécutés dans la même commande (110) (variante 3), et une communication entre le composant de contrôle et le composant de commande a lieu par l'intermédiaire d'une interface inter-systèmes de commande (131, 132, 135).
